# EUROPÄISCHE PATENTSCHRIFT

(11) **EP 1 046 848 B1**
(45) Veröffentlichungstag und Bekanntmachung des Hinweises auf die Patenterteilung: **16.07.2003**
(21) Anmeldenummer: 00810258.4
(22) Anmeldetag: 27.03.2000
(51) Int. Cl.: F16L 3/123, F16L 55/033, F16L 59/02

(54) **Isolierelement für Rohre**
Insulating element for pipes
Elément isolant pour tuyaux

(30) Priorität: 23.04.1999 CH 76299
(43) Veröffentlichungstag der Anmeldung: 25.10.2000
(73) Patentinhaber: Aeroflex International Co., Ltd., Teparak Muang, Samutprakarn 10270 (TH)
(72) Erfinder: Vitroorapakorn, Pawat, Samutprakarn, 10270 (TH)
(74) Vertreter: Rottmann, Maximilian R.

(56) Entgegenhaltungen:
- EP-A- 0 329 549
- GB-A- 1 137 121
- US-A- 4 025 680

## Beschreibung

Die Erfindung betrifft ein Isolierelement für Rohre zur Bildung eines Aufhängungs- oder Abstützungsabschnitts.

Die Problematik beim Aufhängen oder Abstützen von thermisch isolierten Rohren besteht darin, dass die herkömmlichen Isolationen keine genügende Festigkeit aufweisen, damit Rohrschellen zum Aufhängen oder Abstützen des Rohres daran befestigt werden können. Daher werden die Rohrschellen im allgemeinen direkt am Rohr selber befestigt. Dies wiederum bedingt, dass die Rohrschellen nachträglich isoliert werden müssen, damit keine unerwünschten Kälte- bzw. Wärmebrücken entstehen. Es versteht sich, dass das nachträgliche Isolieren von Rohrschellen einen erheblichen Aufwand mit sich bringt.

Aus der EP 0 503 566 ist ein Rohrisolierstück für eine Aufhängung oder Abstützung einer kälteisolierten Rohrleitung bekannt. Dieses Rohrisolierstück besteht im wesentlichen aus zwei Hohlzylinderhalbschalen, welche mit einem eingesetzten Ringsegment aus druckfestem, thermisch isolierenden Hartschaum versehen sind. Dieses Ringelement erstreckt sich über ein bis drei Viertel des Aussenumfangs der zugehörigen Hohlzylinderhalbschale. Die Aussenhaut des Rohrisolierstücks wird durch ein Metallblech gebildet, welches gleichzeitig die Rohrschelle bildet.

Aus Dokument EP-A-0 329 549 ist ein Isolierelement für Rohre zur Bildung eines Aufhängungs- oder Abstützungsabschnitts bekannt, wobei des Isolierelement eine Trägerbahn aufweist, auf welcher wechselweise mehr und weniger elastische Formkörper angeordnet sind, wobei sowohl die mehr wie auch die weniger elastischen Formkörper thermisch isolierend ausgebildet sind.

Es ist somit die Aufgabe der Erfindung, ein solches Isolierelement derart zu verbessern, dass es einfach in der Handhabung und universell anwendbar ist.

Diese Aufgabe wird durch die im Anspruch 1 angeführten Merkmale gelöst.

Durch die geschilderte, wechselweise Anordnung von formstabilen und elastischen Formkörpern zwischen zwei Trägerbahnen, kann ein derartiges Isolierelement sowohl einerseits Kräfte zur Bildung eines Aufhängungs- oder Abstützungsabschnitts aufnehmen; andererseits ist es flexibel genug, dass es für Rohre mit unterschiedlichen Durchmessern eingesetzt werden kann.

Bevorzugte Ausführungsformen des Erfindungsgegenstands sind in den abhängigen Ansprüchen 2 bis 11 aufgeführt.

So ist bei einem bevorzugten Ausführungsbeispiel vorgesehen, dass das Isolierelement eine bahnförmige Grundform von zumindest 1m Länge aufweist, welche mittels eines Schneidorgans in einzelne Aufhängungs- oder Abstützungsabschnitte abtrennbar ist. Dadurch vereinfacht sich die Lagerhaltung, da nicht für jeden Rohrdurchmesser ein separater Aufhängungs- oder Abstützungsabschnitt eingelagert werden muss.

Nachfolgend wird ein Ausführungsbeispiel der Erfindung anhand einer Zeichnung näher erläutert. In dieser Zeichnung zeigt:
- Fig.1: einen Isolierelement-Abschnitt in der Grundform;
- Fig. 2: einen abgetrennten Isolierelement-Abschnitt in einer ersten Phase beim Anbringen an einem Rohr;
- Fig. 3: den Isolierelement-Abschnitt in einer zweiten Phase beim Anbringen am Rohr, und
- Fig. 4: den Isolierelement-Abschnitt in einer dritten Phase beim Anbringen am Rohr.

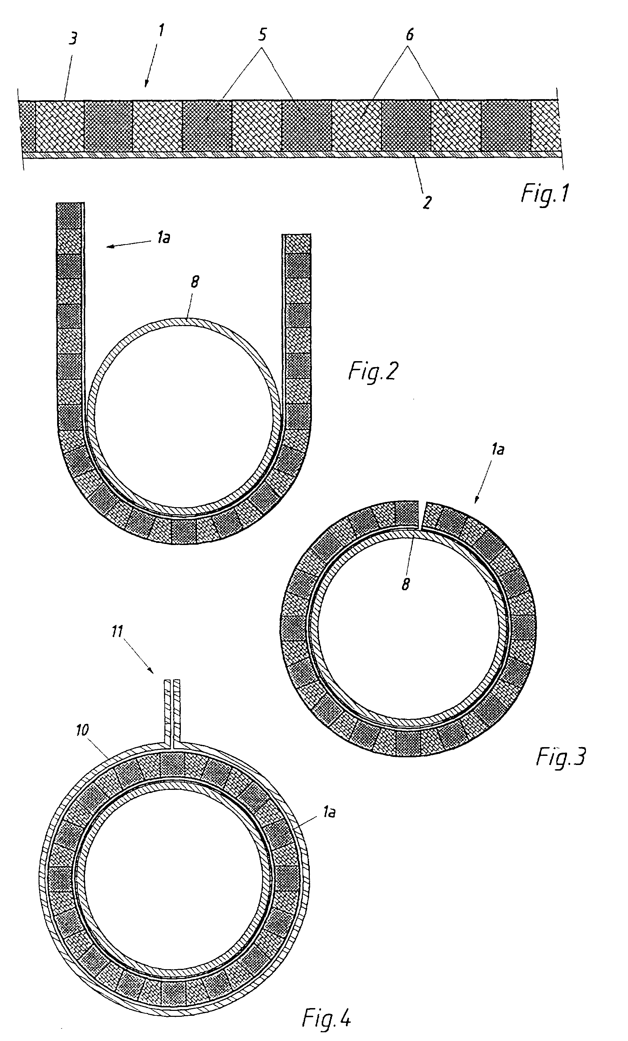

Fig. 1 zeigt in einer gegenüber den nachfolgenden Figuren vergrösserten Ansicht einen Isolierelement-Abschnitt 1, welcher eine bahnförmige Grundform aufweist. Das Isolierelement besteht aus zwei Trägerbahnen 2, 3, zwischen welchen wechselweise formstabile und elastische Formkörper 5, 6 angeordnet sind. Die Formkörper 5, 6 sind quer zur Längsachse der Trägerbahnen 2, 3 angeordnet. Die innere, dem zu isolierenden Rohr zuzuwendende Trägerbahn 2 besteht aus einem aufgeschäumten, synthetischem Kautschuk, währenddem die äussere Trägerbahn 3 aus einem synthetischen Kautschuk besteht, der nicht aufgeschäumt wurde. Die innere Trägerbahn 2 besitzt kompressionselastische Eigenschaften, wodurch sie sich der Form des zu isolierenden Rohrabschnitts anpassen kann. Die äussere Trägerbahn 3 ist im wesentlich zugfest ausgebildet. Vorzugsweise sind beide Trägerbahnen 2, 3 auf der dem jeweiligen Formkörper 5, 6 zugewandten Innenseite mit einem Klebstoff versehen. Die Formkörper 5, 6 sind vorzugsweise auch untereinander verklebt, so dass eine kompakte Isolierelementen-Einheit entsteht. Die elastischen Formkörper 6 sind zusammen mit der inneren Trägerbahn 2 aus einem aufgeschäumten, synthetischem Kautschuk gefertigt. Die formstabilen Formkörper 5 bestehen aus Hartschaum, welcher sehr leicht und dabei gleichzeitig formstabil ist. Sowohl die formstabilen wie auch die elastischen Formkörper 5, 6 und die beiden Trägerbahnen 2, 3 besitzen eine geschlossene Zellstruktur, wodurch sie nicht hygroskopisch wirken. Die Breite der Formkörper 5, 6 beträgt vorzugsweise zwischen 8 und 12 mm und zwar weitgehend unabhängig von deren Höhe. Dadurch wird eine gute Flexibilität bei gleichzeitig hoher Stabilität erreicht. Es versteht sich, dass andererseits die Höhe der Formkörper 5, 6 in weiten Bereichen variieren kann. So können für grosse Rohrdurchmesser durchaus Formkörper 5, 6 mit einer Höhe von bis zu 50 mm Verwendung finden. Die Breite der Bahn beträgt im Normalfall ca. 5 bis 15 cm.

Neben synthetischem Kautschuk kommen auch Thermoplaste zur Fertigung der Trägerbahnen 2, 3 und der flexiblen Formkörper 6 in Frage, wobei grundsätzlich sowohl organische wie auch anorganische Materialien verwendet werden können.

Bevorzugterweise werden derartige Isolierelemente in Bahnen von ca. 1 bis 3m Länge gefertigt. Das Abtrennen eines Bahnabschnitts zur Bildung des gewünschten Isolierelement-Abschnitts kann mittels eines herkömmlichen Schneidorgans wie beispielsweise einem Messer erfolgen.

Fig. 2 zeigt einen abgetrennten Isolierelement-Abschnitt 1a in einer ersten Phase beim Anbringen an einem Rohr 8. Der flexible Abschnitt 1a wird dabei einfach um das Rohr 8 gelegt und in die in Fig. 3 gezeigte Stellung gebracht, in der das Rohr 8 voll umschlossen wird. Danach wird der Isolierelement-Abschnitt 1a gemäss Fig. 4 mit einer Rohrschelle 10 versehen, mittels welcher der Isolierelement-Abschnitt 1a einerseits entlang seiner Innenseite satt an das Rohr 8 angepresst wird und dessen beiden Enden zusammengeführt werden. Zum anderen ist die Rohrschelle 10 mit einem Aufhängungs- oder Abstützungsorgan 11 versehen, mittels welchem das Rohr 8 aufgehängt oder bei einer entsprechenden Ausführungsform auch abgestützt werden kann. Durch die kompressionselastischen Eigenschaften der inneren Trägerbahn 2 kann sich die Innenseite des Isolierelement-Abschnitts 1a der äusseren Kontur des Rohrs 8 anpassen.

Ein derartig ausgestaltetes Isolierelement 1, 1a für Rohre 8 zur Bildung eines Aufhängungs- oder Abstützungsabschnitts ist einfach in der Handhabung und sehr universell einsetzbar, da es sich durch den flexiblen Aufbau unterschiedlichsten Rohrdurchmessern anpassen lässt. Der benötigte Abschnitt 1a kann mit einem Messer in der gewünschten Länge vom Ausgangsabschnitt 1 abgetrennt werden.

## Patentansprüche

1. Isolierelement (1) für Rohre zur Bildung eines Aufhängungs- oder Abstützungsabschnitts (1a), wobei das Isolierelement (1) zwei Trägerbahnen (2, 3) aufweist, zwischen welchen wechselweise formstabile und elastische Formkörper (5, 6) angeordnet sind, deren Längsachsen quer zur Längsachse der Trägerbahnen (2, 3) verlaufen, wobei sowohl die formstabilen wie auch die elastischen Formkörper (5, 6) thermisch isolierend ausgebildet sind.

2. Isolierelement (1) nach Anspruch 1, **dadurch gekennzeichnet, dass** das Isolierelement (1) eine bahnförmige Grundform von zumindest 1m Länge aufweist, welche mittels eines Schneidorgans in einzelne Aufhängungs- oder Abstützungsabschnitte (1a) abtrennbar ist.

3. Isolierelement (1) nach Anspruch 1 oder 2, **dadurch gekennzeichnet, dass** die Breite der Formkörper (5, 6) zwischen 5 und 15 mm, insbesondere zwischen 8 und 12 mm beträgt.

4. Isolierelement (1) nach einem der vorhergehenden Ansprüche, **dadurch gekennzeichnet, dass** die dem zu isolierenden Rohr (8) zuzuwendende innere Trägerbahn (2) kompressionselastisch ist.

5. Isolierelement (1) nach einem der vorhergehenden Ansprüche, **dadurch gekennzeichnet, dass** die äussere Trägerbahn (3) im wesentlich zugfest ist.

6. Isolierelement (1) nach Anspruch 4 oder 5, **dadurch gekennzeichnet, dass** die innere Trägerbahn (2) aus einem aufgeschäumten, synthetischem Kautschuk oder Thermoplasten gefertigt ist.

7. Isolierelement (1) nach einem der Ansprüche 4 bis 6, **dadurch gekennzeichnet, dass** die äussere Trägerbahn (3) aus einem nicht aufgeschäumten, synthetischem Kautschuk oder Thermoplasten gefertigt ist.

8. Isolierelement (1) nach einem der vorhergehenden Ansprüche, **dadurch gekennzeichnet, dass** beide Trägerbahnen (2, 3) einseitig mit einem Klebstoff für die Formkörper (5, 6) versehen sind.

9. Isolierelement (1) nach einem der vorhergehenden Ansprüche, **dadurch gekennzeichnet, dass** zumindest eine Trägerbahn (2, 3) und die elastischen Formkörper (6) aus synthetischem Kautschuk oder einem Thermoplasten gefertigt sind.

10. Isolierelement (1) nach einem der vorhergehenden Ansprüche, **dadurch gekennzeichnet, dass** die formstabilen Formkörper (5) aus einem steifen und porösen Material gefertigt sind.

11. Isolierelement nach einem der vorhergehenden Ansprüche, **dadurch gekennzeichnet, dass** sowohl die formstabilen wie auch die elastischen Formkörper (5, 6) aus einem nicht hygroskopisch wirkenden, insbesondere aus einem Material mit geschlossener Zellstruktur gefertigt sind.

## Claims

1. Insulating element (1) for pipes for forming a suspension or supporting section (1a), the insulating element (1) having two backing sheets (2, 3), between which dimensionally stable and elastic moulded bodies (5, 6) are alternately arranged, the longitudinal axes of which run transversely to the longitudinal axis of the backing sheets (2, 3), both the dimensionally stable and the elastic moulded bodies (5, 6) being designed to be thermally insulating.

2. Insulating element (1) according to the preceding claim, **characterized in that** the insulating element (1) has a sheet-like basic form of at least 1 m length, which can be cut off by means of a cutting element into individual suspension or supporting sections (1a).

3. Insulating element (1) according to Claim 1 or 2, **characterized in that** the width of the moulded bodies (5, 6) is between 5 and 15 mm, in particular between 8 and 12 mm.

4. Insulating element (1) according to one of the preceding claims, **characterized in that** the inner backing sheet (2) to be turned towards the pipe (8) to be insulated is compression-elastic.

5. Insulating element (1) according to one of the preceding claims, **characterized in that** the outer backing sheet (3) is essentially tension-proof.

6. Insulating element (1) according to Claim 4 or 5, **characterized in that** the inner backing sheet (2) is made of a foamed, synthetic rubber or thermoplastic.

7. Insulating element (1) according to one of Claims 4 to 6, **characterized in that** the outer backing sheet (3) is made of a non-foamed, synthetic rubber or thermoplastic.

8. Insulating element (1) according to one of the preceding claims, **characterized in that** both backing sheets (2, 3) are provided on one side with an adhesive for the moulded bodies (5, 6).

9. Insulating element (1) according to one of the preceding claims, **characterized in that** at least one backing sheet (2, 3) and the elastic moulded bodies (6) are made of synthetic rubber or a thermoplastic.

10. Insulating element (1) according to one of the preceding claims, **characterized in that** the dimensionally stable moulded bodies (5) are made of a rigid and porous material.

11. Insulating element (1) according to one of the preceding claims, **characterized in that** both the dimensionally stable and the elastic moulded bodies (5, 6) are made of a material which acts in a non-hygroscopic manner, in particular of a material having a closed cell structure.

## Revendications

1. Elément isolant (1) pour tuyau, permettant de former un tronçon de suspension ou de soutien (1a), l'élément isolant (1) comprenant deux nappes porteuses (2, 3) entre lesquelles sont disposés des corps de forme (5, 6), alternativement indéformables et élastiques, dont les axes longitudinaux s'étendent transversalement à l'axe longitudinal des nappes porteuses (2, 3), aussi bien les corps de forme indéformables que ceux élastiques (5, 6), étant thermiquement isolants.

2. Elément isolant (1) suivant la revendication 1, **caractérisé en ce que** l'élément isolant (1) présente une forme de base en forme de nappe d'une longueur d'au moins 1 m, qui peut être divisée au moyen d'un organe de coupe en tronçons de suspension ou de soutien (1a) individuels.

3. Elément isolant (1) suivant la revendication 1 ou 2, **caractérisé en ce que** la largeur des corps de forme (5, 6) vaut entre 5 et 15 mm, notamment entre 8 et 12 mm.

4. Elément isolant (1) suivant l'une des revendications précédentes, **caractérisé en ce que** la nappe porteuse intérieure (2) qui fait face au tube (8) à isoler possède une élasticité de compression.

5. Elément isolant (1) suivant l'une des revendications précédentes, **caractérisé en ce que** la nappe porteuse extérieure (3) est essentiellement résistante à la traction.

6. Elément isolant (1) suivant la revendication 4 ou 5, **caractérisé en ce que** la nappe porteuse intérieure (2) est formée d'une matière thermoplastique ou caoutchouc synthétique cellulaire.

7. Elément isolant (1) suivant l'une des revendications 4 à 6, **caractérisé en ce que** la nappe porteuse extérieure (3) est formé d'une matière thermoplastique ou caoutchouc synthétique non cellulaire.

8. Elément isolant (1) suivant l'une des revendications précédentes, **caractérisé en ce que** les deux nappes porteuses (2, 3) sont pourvues, sur une face, d'une,colle pour les corps de forme (5, 6).

9. Elément isolant (1) suivant l'une des revendications précédentes, **caractérisé en ce qu'**au moins une nappe porteuse (2, 3) et les corps de forme élastiques (6) sont formés d'une matière thermoplastique ou d'un caoutchouc synthétique.

10. Elément isolant (1) suivant l'une des revendications précédentes, **caractérisé en ce que** les corps de forme indéformables (5) sont formés d'une matière rigide et poreuse.

11. Elément isolant suivant l'une des revendications précédentes, **caractérisé en ce qu'**au aussi bien les corps de forme indéformables que ceux élastiques (5, 6) sont formés d'une matière non hygroscopique, notamment d'une matière à structure cellulaire fermée.
